# FASCICULE DE BREVET EUROPEEN

(11) **EP 0 407 300 B1**
(45) Date de publication et mention de la délivrance du brevet: **19.01.1994**
(21) Numéro de dépôt: 90401944.5
(22) Date de dépôt: 05.07.1990
(51) Int. Cl.: G08G 1/16

(54) **Dispositif électronique anti-collision embarqué à bord d'un véhicule**
Bordseitige Antikollisionsvorrichtung für ein Fahrzeug
On board electronic anti-collision device for a vehicle

(30) Priorité: 05.07.1989 FR 8909025
(43) Date de publication de la demande: 09.01.1991
(73) Titulaire: II BC-SYS, F-94100 Saint-Maur (FR)
(72) Inventeur: Brillard, Guy, F-95140 Garges Les Gonesse (FR); Brillard, Eric, F-94100 Saint-Maur (FR); Crueize, Jean-Claude, F-77230 Moussy Le Neuf (FR)
(74) Mandataire: Kopacz, William James

(56) Documents cités:
- DE-A- 1 949 105
- DE-A- 2 642 211
- DE-A- 2 818 770
- DE-A- 3 811 324
- FR-A- 2 562 694
- GB-A- 2 175 462

## Description

La présente invention concerne un dispositif destiné à informer instantanément, hors agglomération, les automobilistes mutuellement concernés qu'un ralentissement imminent plus ou moins brutal vient d'avoir lieu et/ou va avoir lieur.

La technique actuelle utilisée pour avertir une succession d'automobilistes que l'un d'entre eux ralentit ou s'arrête consiste à munir les véhicules de feux stops dont l'allumage est asservi à l'actionnement de la pédale de frein. Lorsqu'un véhicule est freiné, ses feux stops s'allument mais seul le conducteur suivant immédiatement peut apercevoir ce signal. Le troisième conducteur de la file ne commence à freiner que lorsque les feux stops du deuxième véhicule s'allument, et ainsi de suite. Il s'ensuit des retards cumulatifs d'informations qui peuvent déboucher sur une collision en chaîne si l'un des conducteurs est distrait ou lent à réagir, s'il roule trop près du véhicule le précédant ou si les conditions de visibilité sont mauvaises. Le phénomène est accentué par la disparité de performance de freinage d'un véhicule à l'autre et de leur chargement respectif. Le document DE-A-3 811 324 divulgue un dispositif permettant de déceler les décélérations brutales et d'allumer des feux indicateur sur le véhicule.

La présente invention a pour but de remédier à ces inconvénients en proposant d'embarquer à bord du véhicule un dispositif électronique adapté à la transmission d'informations à un véhicule le suivant sur une voie donnée et à la réception d'informations en provenance d'un véhicule le précédant sur cette même voie.

Plus précisément, le dispositif selon l'invention comprend :
- pour la transmission d'informations :
   . un analyseur chronomètrique adapté à détecter une éventuelle décélération du véhicule en comparant, à des intervalles de temps déterminés, les valeurs de vitesse se succédant telles qu'elles lui sont communiquées par un capteur approprié et, en cas de décélération détectée excédant un certain seuil, à envoyer un signal correspondant à un dispositif émetteur radio;
   . un tel dispositif émetteur adapté à émettre un signal de décélération via une antenne directionnelle placée à l'arrière du véhicule, et
- pour la réception d'informations :
   . un dispositif récepteur radio adapté à recevoir, via une antenne directionnelle placée à l'avant du véhicule, un signal de décélération émis par un véhicule le précédant et à le transmettre à un boîtier électronique,
   . un tel boîtier électronique adapté à émettre, en cas de réception d'un signal de décélération, une alarme visuelle et/ou sonore dans l'habitacle du véhicule, lesdits émetteur et récepteur appartenant à un seul et même équipement, cet équipement comprenant un oscillateur à synthétiseur de fréquence adapté à l'utilisation de plusieurs fréquences choisies en fonction du sens de circulation et de la voie empruntée par le véhicule.

Grâce à cet ensemble de dispositions, le dispositif résoud le problème des retards cumulatifs en alertant instantanément les automobilistes concernés, quelles que soient les conditions de visibilités et quel que soit la réaction ou le comportement des automobilistes interposés entre le véhicule à l'origine du ralentissement et un automobiliste suivant donné.

Il en résulte évidemment une amélioration de la sécurité de la circulation.

Le choix des fréquences en fonction du sens de la circulation et de la voie empruntée par le véhicule est destiné à éviter que des interférences se produisent entre les informations provenant de véhicules roulant dans des sens différents ou dans tout autre cas litigieux. A cet effet, il est établi un protocole ou une convention d'utilisation communiqué à l'utilisateur dans un manuel fourni avec le dispositif.

Dans une forme de réalisation préférée de l'invention, l'analyseur chronomètrique est adapté à envoyer sélectivement deux signaux différents selon l'intensité de la décélération - brutale ou sérieuse - et le boîtier est adapté à émettre sélectivement deux alarmes visuelles et/ou sonores différentes en fonction du signal de décélération reçu.

En pratique, l'analyseur chronomètrique peut émettre un signal de décélération brutale lorsqu'il détecte une décélération supérieure à 20̸ km/h en trois secondes ou moins et un signal de décélération sérieuse lorsqu'il détecte une décélération supérieure à 20̸ km/h en quatre à dix secondes.

De préférence également, l'émetteur est en outre réuni fonctionnellement au dispositif de commande des feux de route, de brouillard et de croisement duquel il reçoit un signal lorsque lesdits feux sont allumés, ledit émetteur étant adapté à émettre un signal de proximité correspondant, et ledit boîtier étant adapté, à réception de ce signal de proximité, à émettre une alarme visuelle et/ou sonore de proximité.

Cette disposition est spécifiquement adaptée à la circulation par temps de brouillard ou toute autre condition nécessitant l'allumage des feux de croisement, des feux de brouillard ou des feux de route.

Plusieurs situations pouvant se produire simultanément, un ordre de priorité doit être organisé. A cette fin, le dispositif comporte des moyens sélecteurs adaptés, en cas de sollicitation de l'émetteur et/ou du récepteur simultanément par un signal de décélération et par un signal de proximité, à donner la priorité au signal de décélération et des moyens sélecteurs adaptés, en cas de sollicitation de l'émetteur et/ou du récepteur simultanément par un signal de décélération brutale et par un signal de décélération intense, à donner la priorité au signal de décélération brutale.

Dans la pratique, les antennes d'émission et de réception sont orientées horizontalement dans un plan perpendiculaire à la direction de déplacement du véhicule et la portée des dispositifs émetteur et récepteur est inférieure ou égale à environ 10̸0̸0̸ mètres.

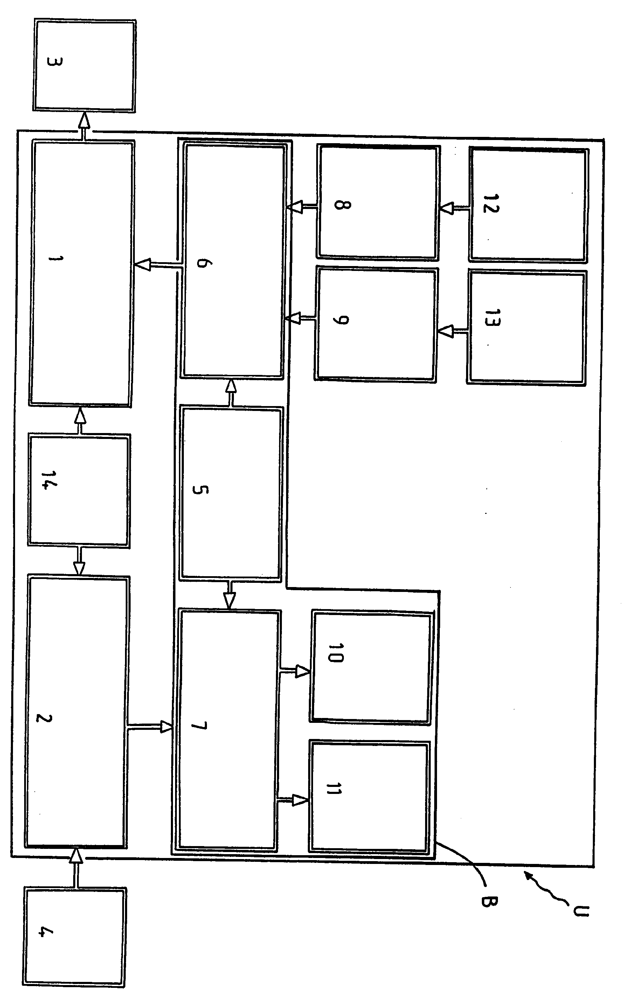

Une forme d'exécution de l'invention est décrite ci-après avec davantage de détails par référence à la planche unique du dessin annexé qui est un schéma synoptique du dispositif.

Le dispositif selon l'invention comprend, d'une part, une unité U qui est alimentée électriquement par branchement sur la batterie du véhicule et qui est placée dans l'habitacle du véhicule, de manière à être visible par le conducteur et accessible à ce dernier et, d'autre part, une antenne d'émission 3 et une antenne de réception 4. L'unité U renferme un émetteur 1 et un récepteur 2. L'émetteur 1, qui émet via l'antenne d'émission 3, est soumis à une interface décisionnelle automatique 6 reliée, d'une part, à un dispositif de mesure de vitesse électronique ou analyseur chronométrique 8 recevant ses informations d'un capteur de vitesse 12 et, d'autre part, à un détecteur électronique 9 connecté à la commande d'allumage feux de croisement/feux de brouillard/feux de route 13. Le récepteur 2, qui reçoit ses informations de l'antenne de réception 4, les transmet à une interface de décodage 7 qui les adresse à une série 10̸ d'indicateurs visuels et à un indicateur auditif 11. La série d'indicateurs visuels est constituée de trois voyants lumineux de couleurs rouge, orange et verte. L'indicateur auditif est constitué d'un haut-parleur ou vibreur 11 associé à un potentiomètre de réglage du volume (non représenté) et couplé à un interrupteur de mise en et hors fonctionnement (également non représenté). L'émetteur 1 et le récepteur 2 sont soumis à un sélecteur de canaux à multi-positions 14 (oscillateur à synthétiseur de fréquences). L'interface décisionnelle automatique 6 et l'interface de décodage 7 sont en liaison avec une base de temps 5.

Le principe de fonctionnement prévoit, dès la mise en route, le déclenchement automatique d'émissions de faible portée et codifiées diversement suivant trois origines :
- première origine : un ralentissement brutal du véhicule de plus de 20̸ km/h environ en trois secondes ou moins provoqué par un coup de frein brutal ou le heurt du véhicule contre un obstacle ;
- deuxième origine : un ralentissement sérieux du véhicule de plus de 20̸ km/h se produisant environ en quatre à dix secondes ;
- troisième origine : l'allumage des feux de croisement, des feux de brouillard ou des feux de route.

La codification des émissions-réceptions suivant les origines peut être la suivante :
a) première origine : émission d'un signal continu pendant 4 secondes. En réception, ce signal continu de 4 secondes est répercuté par le vibreur et visualisé par l'allumage du voyant rouge pendant 4 secondes;
b) deuxième origine : émission d'un ton modulé pendant 2 secondes toutes les 2 secondes. En réception, ce signal modulé est répercuté par le vibreur et visualisé par l'allumage du voyant orange pendant 2 secondes toutes les 2 secondes ;
c) troisième origine : émission pendant 1 seconde de plusieurs tons modulés toutes les 30̸ secondes. En réception, ce signal est visualisé par l'allumage du voyant orange avec le même temps de marche du vibreur, soit 1 seconde toutes les 30̸ secondes.

A la mise sous tension, une séquence d'auto-test est activée, mettant en évidence le bon fonctionnement des voyants et du vibreur. Le voyant vert reste allumé pour indiquer la mise en veille de l'appareil et il s'éteint pendant l'allumage des autres voyants.

La réception d'un message par l'antenne 4 située à l'avant du véhicule est matérialisée par le son du vibreur et l'allumage des voyants. Elle n'est pas liée à l'émission de signaux par l'antenne 3 située à l'arrière au véhicule, émission qui découle d'une des trois origines précitées et reflétant la situation propre du véhicule. Ces deux fonctions peuvent être remplies simultanément sans aucune interférence au sein du même système.

Il est bien entendu que l'invention n'est pas limitée à la forme d'exécution décrite et représentée et qu'elle pourrait être mise en oeuvre dans le cadre d'autres véhicules que des véhicules automobiles.

## Revendications

1. Dispositif électronique embarqué à bord d'un véhicule pour la transmission d'informations à un véhicule le suivant sur une voie donnée et pour la réception d'informations en provenance d'un véhicule le précédant sur cette même voie, caractérisé en ce qu'il comprend :
- pour la transmission d'informations :
. un analyseur chronomètrique (8) adapté à détecter une éventuelle décélération du véhicule en comparant, à des intervalles de temps déterminés, les valeurs de vitesse se succédant telles qu'elles lui sont communiquées par un capteur approprié (12) et, en cas de décélération détectée excédant un certain seuil, à envoyer un signal correspondant à un dispositif émetteur radio (1) ;
. un tel dispositif émetteur (1) adapté à émettre un signal de décélération via une antenne directionnelle (3) placée à l'arrière du véhicule, et
- pour la réception d'informations :
. un dispositif récepteur radio (2) adapté à recevoir, via une antenne directionnelle (4) placée à l'avant du véhicule, un signal de décélération émis par un véhicule le précédant et à le transmettre à un boîtier électronique (B),
. un tel boîtier électronique (B) adapté à émettre, en cas de réception d'un signal de décélération, une alarme visuelle et/ou sonore dans l'habitacle au véhicule,
et caractérisé en ce que lesdits émetteur (1) et récepteur (2) appartiennent à un seul et même équipement, cet équipement comprenant un oscillateur à synthétiseur de fréquences adapté à l'utilisation de plusieurs fréquences choisies (14) en fonction du sens de circulation et de la voie empruntée par le véhicule.

2. Dispositif selon la revendication 1, caractérisé en ce que l'analyseur chronomètrique (8) est adapté à envoyer sélectivement deux signaux différents selon l'intensité de la décélération - brutale ou sérieuse - et en ce que le boîtier (B) est adapté à émettre sélectivement deux alarmes visuelles (10̸) et/ou sonores (11) différentes en fonction du signal de décélération reçu.

3. Dispositif selon la revendication 2, caractérisé en ce que l'analyseur chronomètrique (8) émet un signal de décélération brutale lorsqu'il détecte une décélération supérieure à 20̸ km/h en trois secondes ou moins.

4. Dispositif selon la revendication 2, caractérisé en ce que l'analyseur chronomètrique (8) émet un signal de décélération sérieuse lorsqu'il détecte une décélération supérieure à 20̸ km/h en quatre à dix secondes.

5. Dispositif selon l'une quelconque des revendications 1 à 4, caractérisé en ce que l'émetteur (1) est en outre réuni fonctionnellement au dispositif de commande (13) des feux de route, des feux de brouillard et des feux de croisement duquel il reçoit un signal lorsque lesdits feux sont allumés, en ce que ledit émetteur (1) est adapté à émettre un signal de proximité correspondant, et en ce que ledit boîtier (B) est adapté, à réception de ce signal de proximité, à émettre une alarme visuelle (10̸) et/ou sonore de proximité (11).

6. Dispositif selon la revendication 5, caractérisé en ce qu'il comporte des moyens sélecteurs adaptés, en cas de sollicitation de l'émetteur (1) et/ou du récepteur (2) simultanément par un signal de décélération et par un signal de proximité, à donner la priorité au signal de décélération.

7. Dispositif selon la revendication 5 ou 6, caractérisé en ce qu'il comporte des moyens sélecteurs adaptés, en cas de sollicitation de l'émetteur (1) et/ou du récepteur (2) simultanément par un signal de décélération brutale et par un signal de décélération intense, à donner la priorité au signal de décélération brutale.

8. Dispositif selon l'une quelconque des revendications 1 à 7, caractérisé en ce que les antennes d'émission (3) et de réception (4) sont orientées horizontalement dans un plan perpendiculaire à la direction de déplacement du véhicule.

9. Dispositif selon l'une quelconque des revendications 1 à 8, caractérisé en ce que la portée des dispositifs émetteur et récepteur est inférieure ou égale à environ 10̸0̸0̸ mètres.

## Patentansprüche

1. Elektronische Vorrichtung an Bord eines Fahrzeugs zum Senden von Informationen an ein nachfolgendes Fahrzeug auf einer gegebenen Fahrspur und zum Empfang von Informationen von einem vorherfahrenden Fahrzeug auf der gleichen Fahrspur, durch die folgenden Merkmale gekennzeichnet:
a) zum Senden von Informationen:
- ein chronometrischer Analysator (8) zur Erfassung einer eventuellen Verzögerung des Fahrzeugs durch Vergleich in vorbestimmten Zeitintervallen der ihm durch einen geeigneten Meßwertaufnehmer (12) übertragenen Geschwindigkeitswerte, und zur Übermittlung eines entsprechenden Signals an eine Funksendevorrichtung (1) im Falle der Erfassung einer einen bestimmten Schwellenwert überschreitenden Verzögerung;
- eine solche Funksendevorrichtung (1) zum Senden eines Verzögerungssignals über eine hinten am Fahrzeug angebrachte Richtantenne (3) und
b) zum Empfangen von Informationen:
- eine Funkempfängervorrichtung (2) zum Empfangen eines von einem vorfahrenden Fahrzeug gesendeten Verzögerungssignals über eine vorne am Fahrzeug angebrachte Richtantenne (4) und zum Weiterleiten an ein elektronisches Gehäuse (B),
- ein solches elektronisches Gehäuse (B) zum Senden eines optischen und/oder akustischen Alarmsignal im Cockpit des Fahrzeugs im Falle des Empfangs eines Verzögerungssignals,
und dadurch gekennzeichnet,
daß die genannten Sender (1) und Empfänger (2) zu einer und derselben Einrichtung gehören, welche einen Oszillator mit Frequenzsynthesator umfaßt, der zur Verwendung von mehreren, in Funktion der Verkehrsrichtung und der vom Fahrzeug benutzten Fahrspur gewählten Frequenzen (14) geeignet ist.

2. Vorrichtung gemäß Anspruch 1,
dadurch gekennzeichnet,
daß der chronometrische Analysator (8) geeignet ist zum selektierbaren Senden zweier von der Intensität der Verzögerung - scharf oder beträchtlich - abhängiger verschiedener Signale und daß das elektronische Gehäuse (B) geeignet ist zum selektierbaren Senden zweier, dem empfangenen Verzögerungssignal angepaßter optischer (10) und/oder akustischer (11) Alarmzeichen.

3. Vorrichtung gemäß Anspruch 2,
dadurch gekennzeichnet,
daß der chronometrische Analysator (8) ein Signal für scharfe Verzögerung sendet, wenn er eine Verzögerung erfaßt, die größer als 20 km/h in drei Sekunden oder weniger ist.

4. Vorrichtung gemäß Anspruch 2,
dadurch gekennzeichnet,
daß der chronometrische Analysator (8) ein Signal für merkbare Verzögerung sendet, wenn er eine Verzögerung erfaßt, die größer als 20 km/h innerhalb von vier bis zehn Sekunden ist.

5. Vorrichtung gemäß einem der Ansprüche 1 bis 4,
dadurch gekennzeichnet,
daß der Sender (1) zusätzlich mit der Steuervorrichtung (13) für die Abblend-, Fern- und Blinklichter funktionell verbunden ist, von welchen er ein Signal bekommt, wenn diese Lichter eingeschaltet sind, daß der genannte Sender (1) geignet ist zum Senden eines entsprechenden Nähesignals und daß das genannte Gehäuse (B) dazu geeignet ist, bei Empfang dieses Nähesignals ein optisches und/oder akustisches Alarmsignal (11) abzugeben.

6. Vorrichtung gemäß Anspruch 5,
dadurch gekennzeichnet,
daß sie Auswählmittel aufweist, welche im Falle der gleichzeitigen Inanspruchnahme des Senders (1) und/oder des Empfängers (2) durch ein Verzögerungssignal und ein Nähesignal dazu geeignet ist, dem Verzögerungssignal Priorität zu gewähren.

7. Vorrichtung gemäß Anspruch 5 oder 6,
dadurch gekennzeichnet,
daß sie Auswählmittel aufweist, welche im Falle der gleichzeitigen Inanspruchnahme des Senders (1) und/oder des Empfängers (2) durch ein Signal für scharfe Verzögerung und ein Signal für starke Verzögerung dazu geeginet ist, dem Signal für scharfe Verzögerung Priorität zu gewähren.

8. Vorrichtung gemäß einem der Ansprüche 1 bis 7,
dadurch gekennzeichnet,
daß die Antennen für Senden (3) und Empfang (4) horizontal in einer zur Richtung der Fortbewegung des Fahrzeugs rechtwinkligen Ebene orientiert sind.

9. Vorrichtung gemäß einem der Ansprüche 1 bis 7,
dadurch gekennzeichnet,
daß die Reichweite der Sende- und Empfangsvorrichtungen kleiner oder gleich ca. 1.000 m ist.

## Claims

1. An electronic device carried on board of a vehicle for use in transmitting information to a vehicle which follows it on a given road and in receiving information from a vehicle which precedes it on said road, characterised in that :
- for transmitting information :
. a chronometrical analyzer (8) adapted to detect a possible vehicle deceleration by comparing, at predetermined time intervals, a sequence of speed values as communicated thereto by an appropriate sensor (12) and, should a detected deceleration exceed a given threshold, to send a signal corresponding to a radio emitting device (1),
. a said emitting device (1) adapted to emit a deceleration signal via a directional antenna (3) arranged at a back portion of said vehicle, and
- for receiving information :
. a radio receiving device (2) adapted to receive, via a directional antenna (4) arranged at a front portion of said vehicle a deceleration signal sent by a vehicle which precedes it and to transmit it to an electronic pack (B),
. a said electronic pack (B) adapted to emit, should a deceleration signal be received, a visual and/or sound alarm in the vehicle bassenger space,
and characterized in that said emitter (1) and receiver (2) belong to a single equipment, said equipment including a frequency synthesizer oscilator adapted to using several selected frequencies (14) depending on the traffic direction and the road followed by said vehicle.

2. The device as recited in claim 1, characterized in that said chronometrical analyzer (8) is adapted to selectively send two different signals depending on deceleration intensity - sudden or serious - and in that said pack (B) is adapted to selectively emit two visual (10) and/or sound (11) alarms depending on the received deceleration signal.

3. The device as recited in claim 2, characterized in that said chronometrical analyzer (8) emits a sudden deceleration signal when detecting a higher than 20 km/h deceleration within three seconds or less.

4. The device as recited in claim 2, characterized in that said chronometrical analyser (8) emits a serious deceleration signal when detecting a higher than 20 km/h deceleration within 4- 10 seconds.

5. The device as recited in any claims 1-4, characterized in that said emitter (1) is further operationally connected to the device (13) controlling the headlights, foglights and dipped headlights, from which it receives a signal when said light illuminate, in that said emitter (1) is adapted to send a corresponding proximity signal, and in that said pack (B) is adapted to emit, when receiving said proximity signal, a proximity visual (10) and /or sound (11) alarm.

6. The device as recited in claim 5, characterized in that it includes selector means adapted, should said emitter (1) and/or receiver(2) simultaneously be biased by both a deceleration signal and a proximity signal, to give priority to said deceleration signal.

7. The device as recited in claim 5 or 6, characterized in that it includes selector means adapted, should said emitter (1) and/or said receiver (2) simultaneously be biased by both a sudden deceleration signal and an intense deceleration signal, to give priority to said sudden deceleration signal.

8. The device as recited in any claim 1- 7, characterised in that said emitting (3) and receiving (4) antennas are horizontally directed in a plane orthogonal to the moving direction of said vehicle

9. The device as recited in any claim 1- 8, characterized in that said emitting and receiving devices range is lower than or equal to about 1,000 meters.
